# EUROPEAN PATENT SPECIFICATION

(11) **EP 3 239 026 B1**
(45) Date of publication and mention of the grant of the patent: **19.06.2019**
(21) Application number: 16204379.8
(22) Date of filing: 15.12.2016
(51) Int. Cl.: B62H 1/04, B62H 5/00, B62K 11/14, B60R 25/24

(54) **VEHICLE**
FAHRZEUG
VÉHICULE

(30) Priority: 28.04.2016 JP 2016090696
(43) Date of publication of application: 01.11.2017
(73) Proprietor: YAMAHA HATSUDOKI KABUSHIKI KAISHA, Iwata-shi, Shizuoka 438-8501 (JP)
(72) Inventor: KOBAYASHI, Ryohei, Iwata-shi, Shizuoka 438-8501 (JP)
(74) Representative: Grünecker Patent- und Rechtsanwälte PartG mbB

(56) References cited:
- WO-A1-2009/147690
- FR-A1- 2 792 278
- JP-A- 2002 234 471
- US-A1- 2006 244 575

## Description

The present invention relates to a vehicle according to the preamble of independent claim 1. Such a vehicle can be taken from the prior art document FR 2 792278 A1.

Moreover, prior art document WO 2009/147690 (A1) discloses an anti-theft device for two- or three-wheel vehicles equipped with a stand, comprising: a fixed plate, integral to the engine or chassis of the vehicle and a movable plate, integral to the stand of the vehicle, wherein one of said plates has snap- type, foot- operated means for the mutual blocking, so as to allow to block the stand in position.

Furthermore, prior art document US 2006/244575 (A1) discloses a hands free control apparatus, designed to control the ability to start and operate a motor vehicle, utilizing an RFID transponder for several purposes. It provides ease of use and convenience to the owner, dealership and manufacturer. The Apparatus provides key-less operation of the motor vehicle by enabling the starter, ignition, steering lock, lights, alarm and other features. The apparatus prevents theft by eliminating traditional key switches and requires a unique code to activate the vehicle. The RFID transponder will function at the vehicle dealership, service center or manufacturer to identify the owner of the vehicle and automatically display the owner and vehicle information on computer screens as the owner approaches check out counters, parts counters, and service counters. The device employs a dual use starter button. First it activates the recognition system. Once the unique code is identified the starter button functions as a traditional starter button.

A center stand is sometimes provided in a vehicle such as a motorcycle. A rider of the motorcycle can allow a vehicle body to stably stand on its own by turning the center stand downward at the time of parking (see JP 11-59520 A, for example).

The center stand described in JP 11-59520 A includes a center stand main body and an auxiliary metal piece. The center stand main body is turned downward during parking of a two-wheeled cycle and is turned upward during travelling of the two-wheeled cycle. The auxiliary metal piece restricts a rotation angle of the center stand main body when the center stand main body is turned upward.

Key holes are respectively formed in the center stand main body and the auxiliary metal piece. During the parking of the two-wheeled cycle, the key hole of the center stand main body is opposite to the key hole of the auxiliary metal piece. A user of the two-wheeled cycle can insert an anti-theft key into the key hole of the center stand main body and the key hole of the auxiliary metal piece that are opposite to each other and lock the center stand.

It is described in JP 11-59520 A that the two-wheeled cycle can be reliably disabled from traveling by the above-mentioned locking, and removal of the lock can be disabled. However, it is cumbersome to unlock the center stand for each use of the two-wheeled cycle and causes a large burden on the user. Further, due to the largeness of the burden, the center stand may not be locked routinely. In this case, deterrence of the theft of the two-wheeled cycle is reduced.

It is an object of the present invention is to provide a vehicle of which deterrence of theft can be easily improved.

According to the present invention, said object is solved by a vehicle having the features of independent claim 1. Preferred embodiments are laid down in the dependent claims.
(1) A vehicle according to one aspect used by a user who carries a unique portable device includes a vehicle main body, an authenticator that performs authentication of the portable device, a first operation portion operable by the user, and a center stand device, wherein the center stand device includes a stand main body provided at the vehicle main body to be capable of being shifted between a supporting state and a non-supporting state, the supporting state being a state where the center main body supports the vehicle main body with respect to a road surface and the non-supporting state being a state where the stand main body does not support the vehicle main body with respect to the road surface, a restriction member provided to be switchable between an allowing state and a restricting state, the allowing state being a state where the restriction member allows a shift of the stand main body from the supporting state to the non-supporting state and the restricting state being a state where the restriction member restricts the shift of the stand main body from the supporting state to the non-supporting state, and a driver that switches the restriction member to the allowing state, and the first operation portion transmits an instruction for performing authentication of the portable device to the authenticator, and transmits an instruction for switching the restriction member to the allowing state to the driver on the condition that the authentication by the authenticator is successful.

In this vehicle, the stand main body provided at the vehicle main body enters the supporting state at the time of parking, so that the vehicle main body is supported with respect to the road surface. The shift of the stand main body from the supporting state to the non-supporting state where the vehicle main body is not supported with respect to the road surface is restricted. Then, when the first operation portion is operated by the user, the authentication of the unique portable device carried by the user is performed by transmission of the instruction from the first operation portion to the authenticator. In the case where the authentication by the authenticator is successful, the restriction member is switched to the allowing state by transmission of the instruction from the first operation portion to the driver. Therefore, the shift of the stand main body from the supporting state to the non-supporting state is allowed.

In this configuration, the authentication of the portable device by the operation of the first operation portion is associated with switching of the restriction member to the allowing state by the driver on the condition that this authentication is successful. In this case, the user can switch the restriction member from the restricting state to the allowing state without performing an unlocking operation. Thus, a burden of shifting the stand main body from the supporting state to the non-supporting state for the user is reduced, and the convenience is improved. Therefore, the user is likely to perform the operation of switching the restriction member to the restricting state routinely at the time of parking such that the stand main body is not shifted from the supporting state to the non-supporting state during parking. As a result, deterrence of theft of the vehicle can be easily improved.
(2) The stand main body may be turnably provided relative to the vehicle main body to be shifted between the supporting state and the non-supporting state, the restriction member may be provided to be movable between a first position and a second position, the first position being a position at which the restriction member is located in the allowing state and does not abut against the stand main body and the second position being a position at which the restriction member is located in the restricting state and prevents the shift of the stand main body from the supporting state to the non-supporting state by abutting against the stand main body, the center stand device may further include a biasing member that biases the stand main body in one direction such that the stand main body is shifted from a halfway state between the non-supporting state and the supporting state to the supporting state, and a prevention member that prevents the stand main body, which is in the supporting state and biased by the biasing member, from turning, and a clearance may be formed between the stand main body and the restriction member when the stand main body is in the supporting state and the restriction member is located at the second position.
   In this case, the restriction member does not come into contact with the stand main body in the supporting state. Thus, blocking of the switching of the restriction member between the restricting state and the allowing state can be prevented.
(3) The center stand device may further include a holding member that holds the stand main body at the vehicle main body, and the driver may be attached to the holding member. In this case, the driver is attached to a portion in the vicinity of the stand main body. Thus, the configuration including the driver and the restriction member is made compact. As a result, breakage of the transmitter for transmitting motive power of the driver to the restriction member can be prevented, and the theft of the vehicle can be deterred.
(4) The vehicle may further include a power source electrically connected to the driver, wherein the driver may switch states of the restriction member when electric power is supplied from the power source, and may switch the restriction member to the restricting state when supply of the electric power from the power source is cut off.
   In this case, when the supply of the electric power from the power source to the driver is cut off due to breaking of a wire and the like, the restriction member is kept in the restricting state. Therefore, the stand main body cannot be shifted to the non-supporting state. Thus, the theft of the vehicle can be deterred.
(5) The vehicle may further include a handle bar provided to be turnable with respect to the vehicle main body, and left and right grips respectively provided at left and right ends of the handle bar, wherein the first operation portion may be provided to be adjacent to any one of a right side of the left grip and a left side of the right grip,
   In this case, the user can allow authentication of the portable device and the switching of the restriction member to the allowing state to be performed simultaneously by operating the first operation portion while holding the grip. Thus, the user can immediately perform the operation of shifting the stand main body to the non-supporting state with respect to the road surface while holding the grip, and the convenience is improved.
(6) The vehicle may further include a brake operator provided in the vicinity of the grip to which the first operation portion is adjacent. The user normally activates the brake right after shifting the stand main body to the non-supporting state with respect to the road surface and inhibits the forward movement of the vehicle. Because the above-mentioned configuration enables the user to perform an operation of the brake operator while holding the grip, the convenience is improved.
(7) The vehicle may further include a driving device that is provided at the vehicle main body and generates a thrust force of the vehicle, wherein the first operation portion may transmit an instruction for starting the driving device. In this case, the user can perform a series of operations of allowing the authenticator to perform authentication of the portable device, allowing the driver to switch the restriction member to the allowing state and starting the driving device while holding the grip. Thus, operability can be improved.
(8) The driver may include an actuator main body that moves the restriction member, and a casing that stores the actuator main body, and the actuator main body may switch the restriction member to the restricting state by allowing the restriction member to project from the casing by a first length, and may switch the restriction member to the allowing state by retracting at least part of the restriction member into the casing.
   In this case, the driver and the restriction member are integrated, so that the size of the center stand device can be reduced. Further, the actuator main body and the restriction member can be protected by the casing.
(9) The driver may be arranged such that a projection direction of the restriction member in the restricting state is directed inward in a vehicle width direction. In this case, the access to the restriction member is restricted by the casing and the vehicle main body. Thus, breakage of the restriction member is prevented. As a result, the theft of the vehicle can be more effectively deterred.
(10) The restriction member may project from the casing by a second length that is shorter than the first length in the allowing state.
   In this case, part of the restriction member projects from the casing even in the allowing state. Thus, even in the case where the restriction member projecting through the opening of the casing is switched to the allowing state, the opening of the casing is kept closed by the restriction member. As a result, entrance of water to the casing can be prevented.
(11) The center stand device may further include a cover member that stores the driver. In this case, vandalism of the driver by another person is prevented. Thus, the theft of the vehicle can be deterred.
(12) The vehicle may further include a second operation portion operable by the user, wherein the driver may switch the restriction member from the allowing state to the restricting state when the stand main body is in the supporting state and the second operation portion is operated.

In this case, because the user can shift the stand main body from the non-supporting state to the supporting state, and then switch the restriction member from the allowing state to the restricting state without performing the locking operation, a burden on the user is reduced, and the convenience is improved. Therefore, the user is likely to perform the operation of switching the restriction member to the restricting state routinely at the time of parking such that the stand main body is not shifted from the supporting state to the non-supporting state during parking. As a result, deterrence of the theft of the vehicle can be easily improved.

### BRIEF DESCRIPTION OF THE SEVERAL VIEWS OF THE DRAWING

Fig. 1 is a left side view showing a motorcycle according to one embodiment;
Fig. 2 is a perspective view showing a center stand device;
Fig. 3 is a perspective view showing a driver of the center stand device of Fig. 2;
Figs. 4(a) to 4(c) are a plan view, a left side view and a back view of a cover member;
Fig. 5 is a perspective view showing a stand main body and its vicinity in a supporting state;
Fig. 6 is a perspective view showing the stand main body and its vicinity in a non-supporting state;
Fig. 7 is a perspective view showing a configuration of a handle member; and
Fig. 8 is a block diagram showing a control system of the motorcycle.

### DESCRIPTION OF THE PREFERRED EMBODIMENTS

A motorcycle will be described below as one example of a vehicle according to an embodiment with reference to drawings.

### (1) Motorcycle

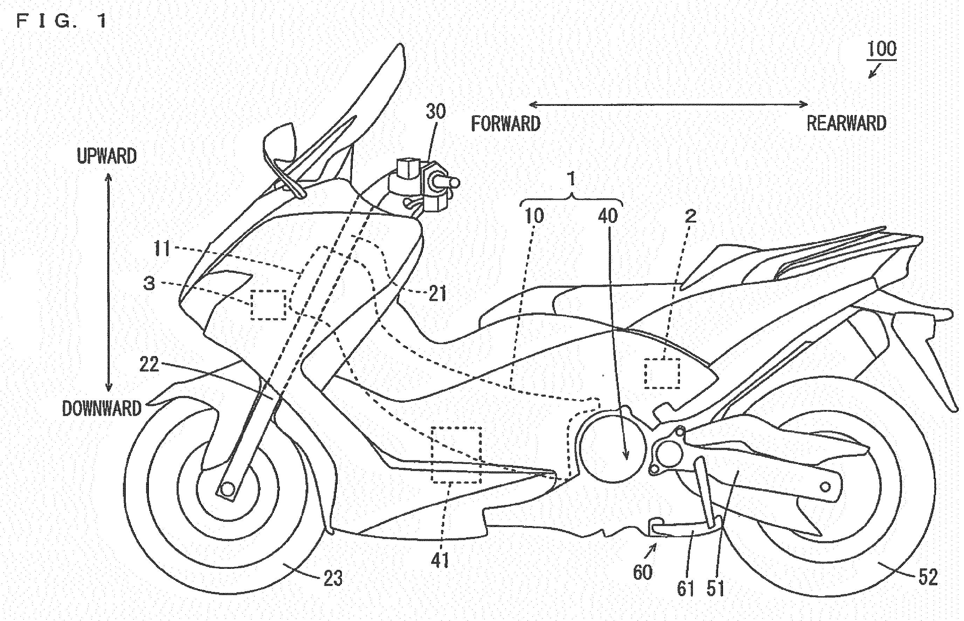

Fig. 1 is a left side view showing the motorcycle according to the one embodiment. In the following description, a front-and-rear direction means forward and rearward directions based on a vehicle main body, a left-and-right direction means leftward and rightward directions based on the vehicle main body and an up-and-down direction means upward and downward directions based on the vehicle main body. In Fig. 1 and subsequent drawings, arrows indicating the directions are suitably shown. Further, an inward direction means a direction towards a center plane of the vehicle main body in the left-and-right direction. Further, a front view means that the motorcycle 100 is viewed in the rearward direction from a position further forward than the vehicle.

As shown in Fig. 1, the motorcycle 100 includes a body frame 10 extending in the front-and-rear direction. A head pipe 11 extending in substantially the up-and-down direction is formed at the front end of the body frame 10. A steering shaft (a stem shaft) 21 extending in substantially the up-and-down direction is inserted into the head pipe 11.

A pair of left and right fork pipes 22 is respectively arranged at the left and right of the steering shaft 21 and connected to the steering shaft 21 by connection members (not shown). A front wheel 23 is rotatably supported between lower portions of the pair of fork pipes 22. A handle member 30 is connected to upper portions of the pair of fork pipes 22. The front wheel 23 turns with respect to the head pipe 11 by an operation of the handle member 30.

An engine unit 40 is supported by the body frame 10 at a rear portion of the body frame 10. The vehicle main body 1 is constituted by the body frame 10 and the engine unit 40. A rear arm 51 is attached to the engine unit 40 to extend rearward from a rear portion of the engine unit 40. A rear wheel 52 is rotatably supported at a rear portion of the rear arm 51. The engine unit 40 includes a single-cylinder engine 41, for example. The rotation of the rear wheel 52 is driven by motive power generated by the engine 41. Thus, a thrust force of the motorcycle 100 is generated.

A center stand device 60 is attached to a lower portion of the engine unit 40 at a position further forward than the rear wheel 52. The center stand device 60 includes a stand main body 61 that can support the vehicle main body 1 with respect to a road surface. Details of the center stand device 60 will be described below,

A controller 2 is provided at a position further upward than the engine unit 40. The controller 2 is an ECU (Engine Control Unit), for example. The controller 2 may be a microcomputer. The controller 2 performs authentication of a portable device carried by a rider to control an operation of the center stand device 60 and controls an operation of the engine unit 40 and the like. Further, a battery 3 is provided at a position further forward than the body frame 10. The battery 3 supplies electric power to various types of electric components provided in the motorcycle 100 and supplies electric power to the center stand device 60.

### (2) Configuration of Center Stand Device

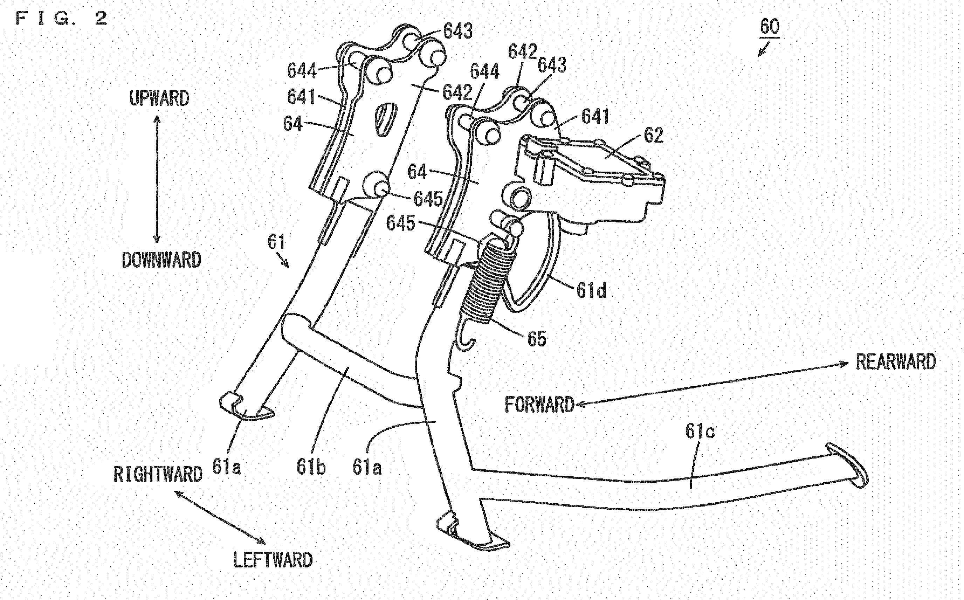

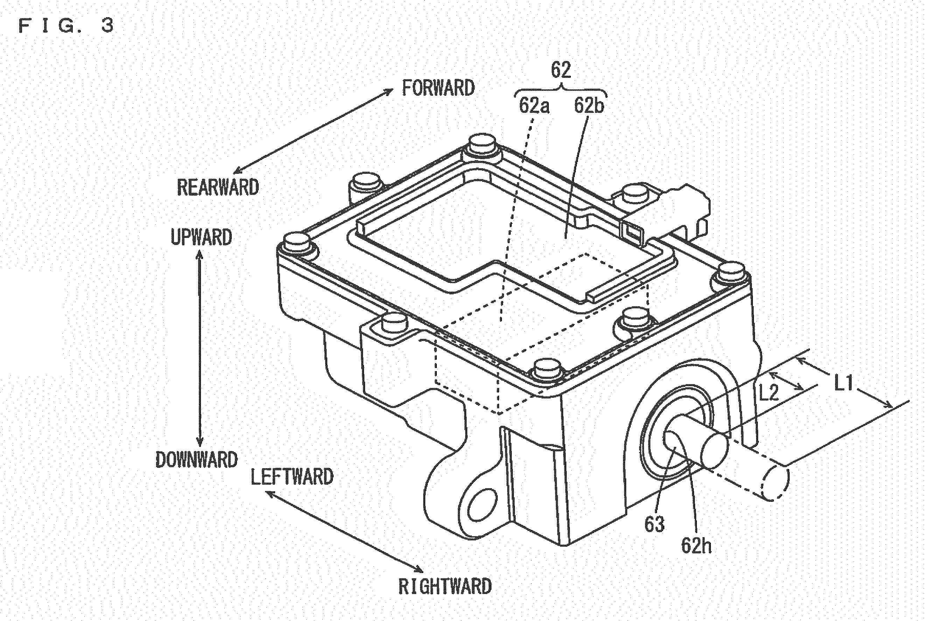

Fig. 2 is a perspective view showing the center stand device 60. Fig. 3 is a perspective view showing a driver 62 of the center stand device 60 of Fig. 2. As shown in Fig. 2, the center stand device 60 includes the stand main body 61, the driver 62, a restriction member 63 (Fig. 3), a pair of holding members 64 and a biasing member 65. The stand main body 61 can be shifted between a supporting state and a non-supporting state by turning with respect to the vehicle main body 1. The supporting state here refers to a state where the stand main body 61 supports the vehicle main body 1 of Fig. 1 with respect to the road surface, and the non-supporting state here refers to a state where the stand main body 61 does not support the vehicle main body 1 with respect to the road surface.

Arrangement of constituent elements in the case where the stand main body 61 is in the supporting state will be described below. As shown in Fig. 2, the stand main body 61 includes a pair of bar-shaped supporters 61a, a bar-shaped connector 61b, a bar-shaped step portion 61c and an abutment portion 61d. The pair of supporters 61a is spaced apart from each other in the left-and-right direction and extends in the up-and-down direction. The connector 61b is connected between substantially center portions in the up-and-down direction of the pair of supporters 61a. Therefore, the pair of supporters 61a and the connector 61b form a substantially H-shape in the front view.

The rider performs a kick operation of the step portion 61c when shifting the stand main body 61 from the non-supporting state to the supporting state. The step portion 61c is provided to extend rearward from a portion in the vicinity of the lower end of the left supporter 61a. The abutment portion 61d is formed of a sheet of metal in a loop shape, for example, and attached to a portion in the vicinity of the upper end of the left supporter 61a. The abutment portion 61d turns within a plane substantially orthogonal to the left-and-right direction (hereinafter referred to as a turning plane) with the turning of the stand main body 61. Details of the abutment portion 61d will be described below.

The pair of holding members 64 is attached to lower portions of the engine unit 40 to sandwich the engine unit 40 of Fig. 1 while being spaced apart from each other in the left-and-right direction. Each holding member 64 is constituted by a pair of plate-shaped members 641, 642, a plurality of fixing members 643, 644 and a shaft member 645. The fixing members 643, 644 couple the pair of plate-shaped members 641, 642 to each other and fix the plate-shaped members 641, 642 to the lower portions of the engine unit 40.

The shaft member 645 couples the pair of plate-shaped members 641, 642 to each other and supports the supporter 61a at the plate-shaped members 641, 642 to be turnable. Thus, the stand main body 61 is held at the vehicle main body 1 to be turnable. The driver 62 is attached to a portion on a left side surface of the left holding member 64. The driver 62 is opposite to the abutment portion 61d of the stand main body 61 with the plate-shaped member 642 of the left holding member 64 sandwiched therebetween. The biasing member 65 is attached between the left supporter 61a and the left holding member 64. The biasing member 65 biases the stand main body 61 in one direction such that, in the case where the stand main body 61 is in a halfway state between the non-supporting state and the supporting state, the stand main body 61 is shifted to the supporting state.

As shown in Fig. 3, the driver 62 includes an actuator main body 62a and a casing 62b. The actuator main body 62a is stored in the casing 62b and electrically connected to the controller 2 and the battery 3 of Fig. 1. The casing 62b has a substantially rectangular parallelepiped shape. A circular opening 62h is formed at a right side surface of the casing 62b.

The restriction member 63 is a pin member having a cylindrical shape, for example, and is stored in the casing 62b while partially projecting from the opening 62h of the casing 62b. In this case, the driver 62 and the restriction member 63 are integrated, so that the size of the center stand device 60 can be reduced. Further, the actuator main body 62a and the restriction member 63 can be protected by the casing 62b.

The restriction member 63 is switched between a restricting state and an allowing state by the actuator main body 62a. The restricting state here refers to a state where a tip end of the restriction member 63 projects from the casing 62b by a length L1, and the allowing state here refers to a state where the tip end of the restriction member 63 projects from the casing 62b by a length L2 that is smaller than the length L1. In Fig. 3, the restriction member 63 in the restricting state is indicated by one-dot and dash lines.

Specifically, the actuator main body 62a switches the restriction member 63 to the restricting state by allowing the restriction member 63 to project from the casing 62b by the length L1. Further, the actuator main body 62a switches the restriction member 63 to the allowing state by retracting the restriction member 63 into the casing 62b. In this case, even in the case where the restriction member 63 is switched to the allowing state, the opening 62h of the casing 62b is kept closed by the restriction member 63. As a result, entrance of water or the like to the casing 62b can be prevented.

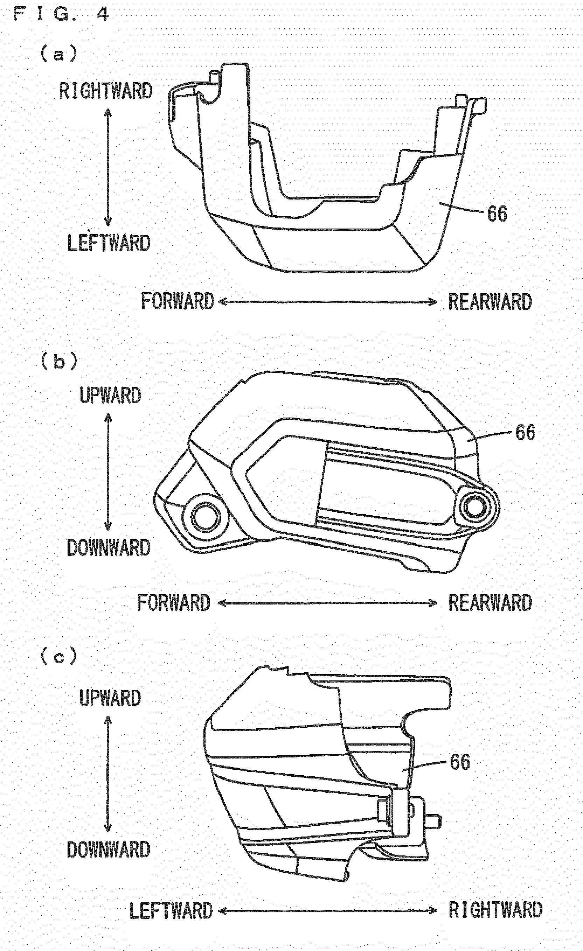

The center stand device 60 further includes a cover member that stores the driver 62. Figs. 4(a), 4(b) and 4(c) are a plan view, a left side view and a back view of the cover member 66, respectively. The cover member 66 of each of Figs. 4(a) to 4(c) is formed of a synthetic resin, for example, and stores the driver 62 to cover the driver 62 from the left.

In this case, because the access to the driver 62 is restricted by the cover member 66, vandalism of the driver 62 by another person is prevented. Further, the cover member 66 has a design function of maintaining aesthetic appearance of the motorcycle 100 as a cowl. Further, the rider of the motorcycle 100 and another person are prevented from applying an erroneous operation such as the use of the driver 62 as a footrest to the driver 62.

### (3) Operation of Center Stand Device

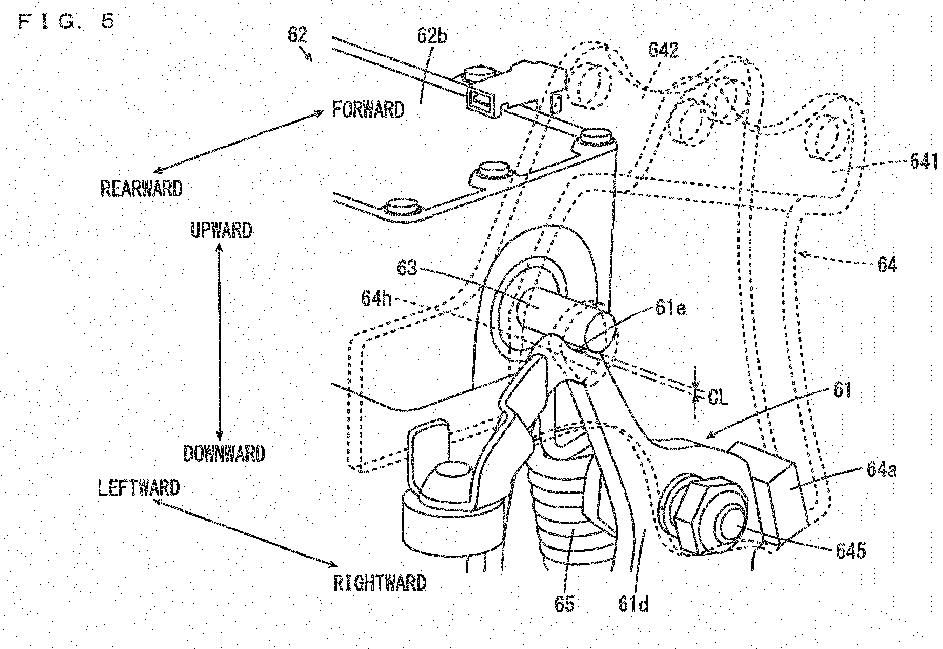

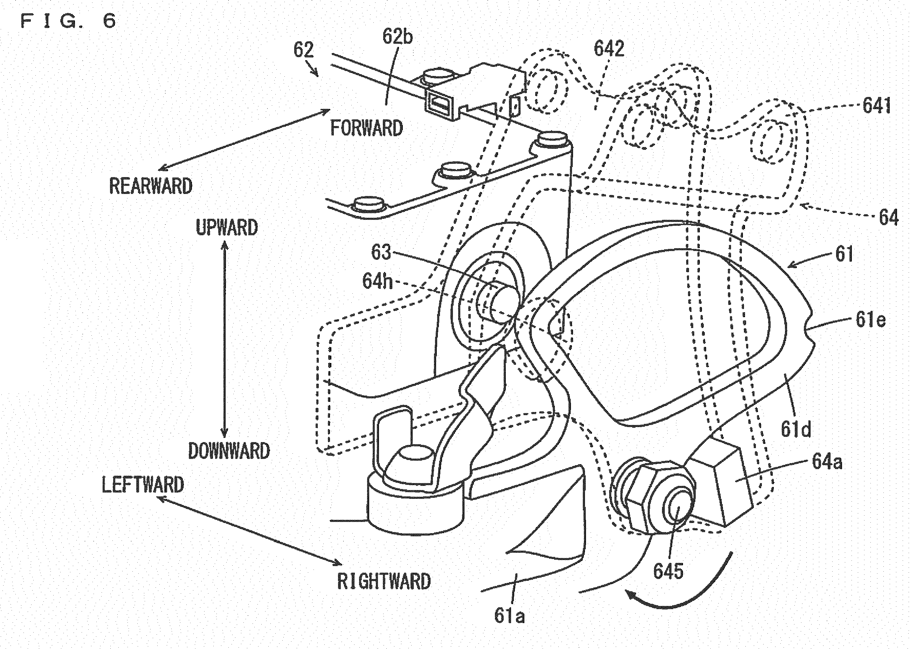

Fig. 5 is a perspective view showing the stand main body 61 and its vicinity in the supporting state. In Fig. 5, the plate-shaped members 641, 642 of the holding member 64 are indicated by dotted lines in order to facilitate understanding of the positional relationship between the stand main body 61 and the driver 62. This also applies to Fig. 6 that is described below.

As shown in Fig. 5, an opening 64h penetrated in the left-and-right direction is formed in each of the plate-shaped members 641, 642 of the left holding member 64. The abutment portion 61d is located between the plate-shaped members 641, 642. A preventer 64a (a stopper) is provided between the plate-shaped members 641, 642. The preventer 64a abuts against the abutment portion 61d of the stand main body 61, which is in the supporting state and biased by the biasing member 65. Thus, the stand main body 61 is prevented from turning forward.

In the supporting state of the stand main body 61, the tip end of the restriction member 63 projects rightward from the casing 62b by the length L1 through the opening 64h of the holding member 64. Thus, the restriction member 63 is in the restricting state. In the restricting state, the restriction member 63 passes through a position further upward than the abutment portion 61d of the stand main body 61 and intersects with the turning plane of the abutment portion 61d.

The abutment portion 61d has a concave-shaped abutment surface 61e corresponding to the shape of the outer peripheral surface of the restriction member 63. The abutment surface 61e is provided to extend from a lower portion towards a rear portion of the outer peripheral surface of the restriction member 63 in the restricting state and be opposite to the outer peripheral surface of the restriction member 63 when the stand main body 61 is in the supporting state. In this case, when the stand main body 61 turns rearward, the abutment portion 61d abuts against the restriction member 63. Therefore, the stand main body 61 cannot be shifted from the supporting state to the non-supporting state.

Further, in the case where the stand main body 61 is in the supporting state and the restriction member 63 is in the restricting state, a subtle clearance CL is formed between the abutment portion 61d and the restriction member 63. In this case, the restriction member 63 does not come into contact with the abutment portion 61d in the supporting state. Thus, blocking of switching of the restriction member 63 between the restricting state and the allowing state can be prevented.

Fig. 6 is a perspective view showing the stand main body 61 and its vicinity in the non-supporting state. As described below, in the case where the authentication by the controller 2 of Fig. 1 of the portable device carried by the rider is successful, the restriction member 63 retracts into the casing 62b. Thus, as shown in Fig. 6, the restriction member 63 projects rightward from the casing 62b by the length L2, and the restriction member 63 enters the allowing state.

In the allowing state, the restriction member 63 does not intersect with the turning plane of the abutment portion 61d and is located at a position further leftward than the turning plane. Therefore, the restriction member 63 does not abut against the abutment portion 61d. Thus, as indicated by a thick arrow in Fig. 6, the stand main body 61 can turn rearward and be shifted to the non-supporting state.

On the other hand, a person who does not carry a portable device cannot switch the restriction member 63 to the allowing state, thereby being unable to shift the stand main body 61 to the non-supporting state. Thus, theft of the motorcycle 100 can be deterred. Further, the driver 62 is arranged such that a projection direction of the restriction member 63 in the restricting state is directed inward in a vehicle width direction (the rightward direction in the present example). In this case, the access to the restriction member 63 is restricted by the casing 62b, the vehicle main body 1, the rear wheel 52 and the like. Thus, breakage of the restriction member 63 is prevented. As a result, the theft of the motorcycle 100 can be more effectively deterred.

The driver 62 is preferably attached to a portion in the vicinity of the stand main body 61. In the present embodiment, the driver 62 is attached to the holding member 64 in the vicinity of the stand main body 61. In this case, the configuration including the driver 62 and the restriction member 63 is made compact. Further, breakage of a transmitter for transmitting motive power of the actuator main body 62a to the restriction member 63 and the like can be prevented and the theft of the motorcycle 100 can be more effectively deterred.

### (4) Authentication of Portable Device

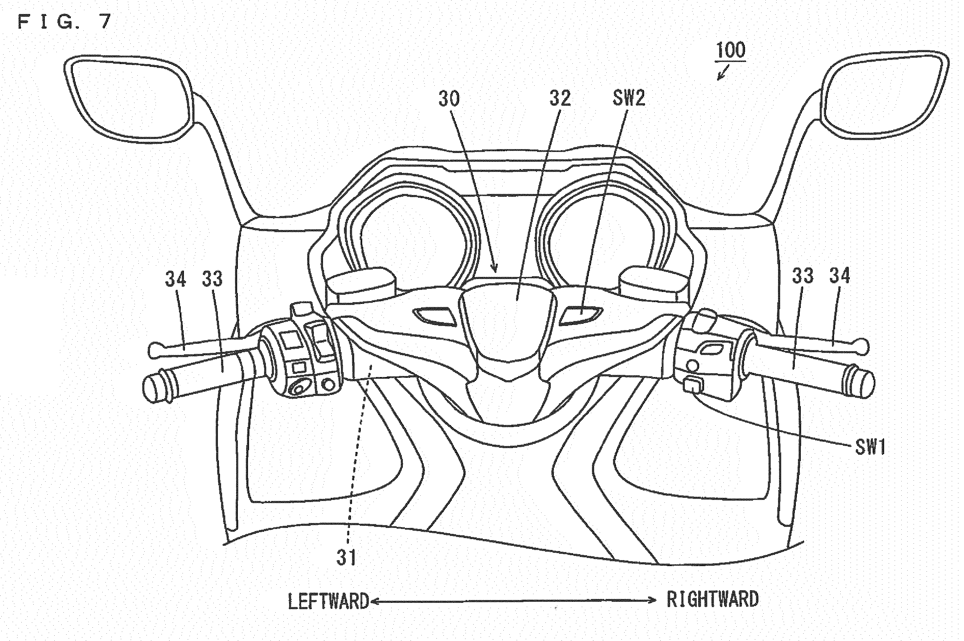

Fig. 7 is a perspective view showing a configuration of the handle member 30. As shown in Fig. 7, the handle member 30 includes a handle bar 31, a handle cover 32, a pair of left and right grips 33 and a pair of left and right brake levers 34. The handle bar 31 is provided to extend in the left-and-right direction and be turnable with respect to the vehicle main body 1. A center portion in the left-and-right direction of the handle bar 31 is covered by the handle cover 32. The pair of grips 33 is respectively attached to the left end and right end of the handle bar 31. The pair of brake levers 34 is respectively attached to portions located at positions further forward than the pair of grips 33.

A plurality of operation switches including operation switches SW1, SW2 are provided on the handle member 30. The operation switch SW1 is preferably provided to be adjacent to the left side of the right grip 33. In this case, the rider can operate the operation switch SW1 while holding the grip 33. The operation switch SW1 may be provided to be adjacent to the right side of the left grip 33. The operation switch SW2 is provided to be exposed from the handle cover 32 in the vicinity of the center portion in the left-and-right direction of the handle bar 31, for example. Functions of the operation switches SW1, SW2 will be described below.

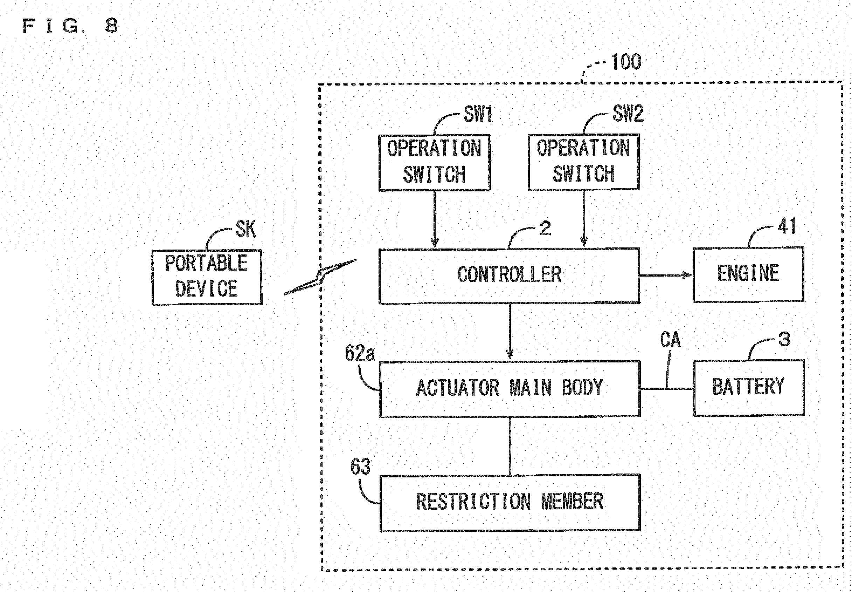

Fig. 8 is a block diagram showing a control system of the motorcycle 100. In an initial state of the motorcycle 100 of Fig. 8, it is assumed that the motorcycle 100 is parked in a parking lot. In this case, as shown in Fig. 5, the stand main body 61 is in the supporting state, and the restriction member 63 is in the restricting state. In this state, when the rider of the motorcycle 100 operates the operation switch SW1, the operation switch SW1 transmits an authentication instruction for performing the authentication of the portable device SK to the controller 2. The portable device SK is a so-called smart key, for example, and carried by the rider who owns the motorcycle 100.

In response to the authentication instruction from the operation switch SW1, the controller 2 performs the authentication of the portable device SK that is present near the motorcycle 100 (within 1 meter, for example). In the case of authentication failure (unsuccessful authentication), the controller 2 does not accept operations of other operation switches provided on the motorcycle 100.

On the other hand, in the case of authentication success (successful authentication), the controller 2 accepts the operations of the other operation switches provided on the motorcycle 100. In this case, the operation switch SW1 transmits a first switch instruction for switching the restriction member 63 to the allowing state to the controller 2. Electric power is supplied from the battery 3 to the actuator main body 62a through wiring CA. In response to the first switch instruction, the controller 2 controls the actuator main body 62a to retract the restriction member 63. Thus, the restriction member 63 is switched to the allowing state.

Further, after the successful authentication, the operation switch SW1 transmits a start instruction for starting the engine 41 to the controller 2. Thus, the engine 41 can start, and the motorcycle 100 can be driven.

Further, after using the motorcycle 100, the rider parks the motorcycle 100 in a parking lot and turns the stand main body 61 to shift the stand main body 61 from the non-supporting state to the supporting state. In the case where the rider operates the operation switch SW2 then, the operation switch SW2 transmits a second switch instruction for switching the restriction member 63 to the restricting state to the controller 2. In response to the second switch instruction, the controller 2 controls the actuator main body 62a to allow the restriction member 63 to project. Thus, the restriction member 63 is switched to the restricting state. Therefore, a person who does not carry the portable device SK cannot shift the stand main body 61 to the non-supporting state.

In the present embodiment, the actuator main body 62a switches the states of the restriction member 63 when the electric power is supplied from the battery 3. Further, in the case where the supply of the electric power from the battery 3 is cut off, the actuator main body 62a switches the restriction member 63 to the restricting state. For example, in the case where the supply of the electric power from the battery 3 to the driver 62 is cut off due to breaking of the wiring CA and the like, the restriction member 63 is kept in the restricting state. Therefore, the stand main body 61 cannot be shifted to the non-supporting state. Thus, the theft of the motorcycle 100 can be deterred.

Further, as described above, because the rider can operate the operation switch SW1 while holding the grip 33 of Fig. 7, the rider can perform the authentication of the portable device SK and switch the restriction member 63 to the allowing state by a simple operation. Thus, the rider can immediately perform an operation of shifting the stand main body 61 to the non-supporting state while holding the grip 33, and the convenience is improved.

In particular, in the present embodiment, the user can perform a series of operations of allowing the controller 2 to perform the authentication of the portable device SK, allowing the actuator main body 62a to switch the restriction member 63 to the allowing state and starting the engine 41 while holding the grip 33. Thus, operability can be more sufficiently improved.

Further, the rider normally activates the brake right after shifting the stand main body 61 to the non-supporting state and inhibits the forward movement of the motorcycle 100. In the example of Fig. 7, the operation switch SW1 is provided to be adjacent to the one grip 33, and the brake lever 34 is provided in the vicinity of the grip 33. Because this arrangement enables the rider to operate the brake lever 34 while holding the grip 33, the convenience is improved.

### (5) Effects

In the motorcycle 100 according to the present embodiment, the authentication of the portable device SK by the operation of the operation switch SW1 is associated with the switching of the restriction member 63 to the allowing state by the driver 62 on the condition that this authentication is successful. In this case, the rider can switch the restriction member 63 from the restricting state to the allowing state without performing the unlocking operation. Thus, a burden of shifting the stand main body 61 from the supporting state to the non-supporting state for the user is reduced, and the convenience is improved.

Further, the rider shifts the stand main body 61 from the non-supporting state to the supporting state, and then operates the operation switch SW2, whereby the rider can switch the restriction member 63 from the allowing state to the restricting state without performing the locking operation. Therefore, a burden on the rider is reduced, and the convenience is improved.

This configuration causes the rider to be likely to switch the restriction member 63 to the restricting state routinely at the time of parking such that the stand main body 61 is not shifted from the supporting state to the non-supporting state during parking. As a result, deterrence of the theft of the motorcycle 100 can be easily improved.

### (6) Correspondences between Constituent Elements in Claims and Parts in Preferred Embodiments

In the following paragraphs, examples of correspondences between various elements recited in the claims below and those described above with respect to various preferred embodiments are explained.

In the above-mentioned embodiment, the portable device SK is an example of a portable device, the motorcycle 100 is an example of a vehicle, the vehicle main body 1 is an example of a vehicle main body and the controller 2 is an example of an authenticator. The operation switches SW1, SW2 are respectively examples of first and second operation portions, the center stand device 60 is an example of a center stand device and the stand main body 61 is an example of a stand main body. The restriction member 63 is an example of a restriction member, the driver 62 is an example of a driver, the biasing member 65 is an example of a biasing member, the preventer 64a is an example of a prevention member, the clearance CL is an example of a clearance and the holding member 64 is an example of a holding member.

The battery 3 is an example of a power source, the handle bar 31 is an example of a handle bar, the grip 33 is an example of a grip, the brake lever 34 is an example of a brake operator and the engine 41 is an example of a driving device. The actuator main body 62a is an example of an actuator main body, the casing 62b is an example of a casing, the lengths L1, L2 are respectively examples of first and second lengths and the cover member 66 is an example of a cover member.

### INDUSTRIAL APPLICABILITY

The present teaching can be effectively utilized for various types of vehicles including center stand devices.

## Claims

1. A vehicle comprising:
a vehicle main body (1);
an authenticator (2) configured to perform authentication of a user of the vehicle;
a first operation portion (SW1) operable by the user; and
a center stand device (60), wherein
the center stand device (60) includes
a stand main body (61) provided at the vehicle main body (1) to be capable of being shifted between a supporting state and a non-supporting state,
the supporting state being a state where the stand main body (61) supports the vehicle main body (1) with respect to a road surface and the non-supporting state being a state where the stand main body (61) does not support the vehicle main body (1) with respect to the road surface,
a restriction member (63) provided to be switchable between an allowing state and a restricting state,
the allowing state being a state where the restriction member (63) allows a shift of the stand main body (61) from the supporting state to the non-supporting state and the restricting state being a state where the restriction member (63) restricts the shift of the stand main body (61) from the supporting state to the non-supporting state, and
a driver (62) configured to switch the restriction member (63) to the allowing state,
wherein the first operation portion (SW1) is configured to transmit an authentication instruction for performing authentication to the authenticator (2), **characterized in that** the first operation portion (SW1) is configured to transmit a first switch instruction for switching the restriction member (63) to the allowing state to the driver (62) on condition that the authentication by the authenticator (2) is successful.

2. The vehicle according to claim 1, **characterized in that** the stand main body (61) is turnably provided relative to the vehicle main body (1) to be shifted between the supporting state and the non-supporting state,
the restriction member (63) is provided to be movable between a first position and a second position,
the first position being a position at which the restriction member (63) is located in the allowing state and does not abut against the stand main body (61) and the second position being a position at which the restriction member (63) is located in the restricting state and prevents the shift of the stand main body (61) from the supporting state to the non-supporting state by abutting against the stand main body (61),
the center stand device (60) further includes
a biasing member (65) that biases the stand main body (61) in one direction such that the stand main body (61) is shifted from a halfway state between the non-supporting state and the supporting state to the supporting state, and
a prevention member (64a) configured to prevent the stand main body (61), which is in the supporting state and biased by the biasing member (65), from turning, and
a clearance (CL) is formed between the stand main body (61) and the restriction member (63) when the stand main body (61) is in the supporting state and the restriction member (63) is located at the second position.

3. The vehicle according to claim 1 or 2, **characterized in that** the center stand device (60) further includes a holding member (64) that holds the stand main body (61) at the vehicle main body (1), and
the driver (62) is attached to the holding member (64).

4. The vehicle according to any one of claims 1 to 3, **characterized by** a power source (3) electrically connected to the driver (62), wherein
the driver (62) is configured to switch states of the restriction member (63) when electric power is supplied from the power source (3), and is configured to switch the restriction member (63) to the restricting state when supply of the electric power from the power source (3) is cut off.

5. The vehicle according to any one of claims 1 to 4, **characterized by:**
a handle bar (31) provided to be turnable with respect to the vehicle main body (1), and
left and right grips (33) respectively provided at left and right ends of the handle bar (31),
wherein
the first operation portion (SW1) is provided at the handle bar (31).

6. The vehicle according to claim 5, **characterized in that** the first operation portion (SW1) is provided to be adjacent to any one of a right side of the left grip (33) and a left side of the right grip (33).

7. The vehicle according to claim 5 or 6, **characterized by** a brake operator (34) provided at the handle bar (31).

8. The vehicle according to claim 7, **characterized in that** the brake operator (34) is provided in the vicinity of the grip (33) to which the first operation portion (SW1) is adjacent.

9. The vehicle according to any one of claims 1 to 8, **characterized by** a driving device (41) that is provided at the vehicle main body (1) and configured to generate a thrust force of the vehicle, wherein
the first operation portion (SW1) is configured to transmit an instruction for starting the driving device (41).

10. The vehicle according to any one of claims 1 to 9, **characterized in that** the driver (62) includes
an actuator main body (62a) that is configured to move the restriction member (63), and a casing (62b) that stores the actuator main body (62a), and
the actuator main body (62a) is configured to switch the restriction member (63) to the restricting state by allowing the restriction member (63) to project from the casing (62b) by a first length (L1), and is configured to switch the restriction member (63) to the allowing state by retracting at least part of the restriction member (63) into the casing (62b).

11. The vehicle according to claim 10, **characterized in that** the driver (62) is arranged such that a projection direction of the restriction member (63) in the restricting state is directed inward in a vehicle width direction.

12. The vehicle according to claim 10 or 11, **characterized in that** the restriction member (63) is configured to project from the casing (62b) by a second length (L2) that is shorter than the first length (L1) in the allowing state.

13. The vehicle according to any one of claims 1 to 12, **characterized in that** the center stand device (60) further includes a cover member (66) that stores the driver (62).

14. The vehicle according to any one of claims 1 to 13, **characterized by** a second operation portion (SW2) operable by the user, wherein
the driver (62) is configured to switch the restriction member (63) from the allowing state to the restricting state when the stand main body (61) is in the supporting state and the second operation portion (SW2) is operated.

15. The vehicle according to any one of claims 1 to 14 provided in combination with a unique portable device (SK) configured to be carried by the user, **characterized in that** the authenticator (2) is configured to perform authentication of the portable device (SK), and the first operation portion (SW1) is configured to transmit the instruction for performing authentication of the portable device (SK) to the authenticator (2).

## Patentansprüche

1. Ein Fahrzeug, das umfasst:
einen Fahrzeug-Haupt-Körper (1);
einen Authentifizierer (2), der konfiguriert ist, eine Authentifizierung eines Benutzers des Fahrzeugs durchzuführen;
einen ersten Betätigungs-Abschnitt (SW1), der durch den Benutzer betätigbar ist; und
eine Mitten-Ständer-Vorrichtung (60), wobei
die Mitten-Ständer-Vorrichtung (60) beinhaltet
einen Ständer-Haupt-Körper (61), der an dem Fahrzeug-Haupt-Körper (1) vorgesehen ist, um in der Lage zu sein, zwischen einem Stütz-Zustand und einem Nicht-Stütz-Zustand geschaltet zu werden,
der Stütz-Zustand ist ein Zustand, in dem der Ständer-Haupt-Körper (61) den Fahrzeug-Haupt-Körper (1) mit Bezug auf eine Straßenoberfläche stützt, und der Nicht-Stütz-Zustand ist ein Zustand, in dem der Ständer-Haupt-Körper (61) den Fahrzeug-Haupt-Körper mit Bezug auf die Straßenoberfläche nicht stützt,
ein Beschränkungs-Element (63), das vorgesehen ist, um schaltbar zwischen einem Gestattungs-Zustand und einem Beschränkungs-Zustand geschaltet zu werden,
der Gestattungs-Zustand ist ein Zustand, in dem das Beschränkungs-Element (63) ein Schalten des Ständer-Haupt-Körpers (61) von dem Stütz-Zustand in den Nicht-Stütz-Zustand gestattet, und der Beschränkungs-Zustand ist ein Zustand, in dem das Beschränkungs-Element (63) das Schalten des Ständer-Haupt-Körpers (61) von dem Stütz-Zustand in den Nicht-Stütz-Zustand beschränkt, und
einen Treiber (62), der konfiguriert ist, um das Beschränkungs-Element (63) in den Gestattungs-Zustand zu schalten, wobei der erste Betätigungs-Abschnitt (SW1) konfiguriert ist, um eine Authentifizierungs-Instruktion zur Durchführung einer Authentifizierung zu dem Authentifizierer (2) zu übertragen, **dadurch gekennzeichnet, dass** der erste Betätigungs-Abschnitt (SW1) konfiguriert ist, um erste Schalt-Instruktionen zum Schalten des Beschränkungs-Elements (63) in den Gestattungs-Zustand zu dem Treiber (62) zu übertragen, unter einer Bedingung, dass die Authentifizierung durch den Authentifizierer (2) erfolgreich ist.

2. Das Fahrzeug gemäß Anspruch 1, **dadurch gekennzeichnet, dass** der Ständer-Haupt-Körper (61) relativ zu dem Fahrzeug-Haupt-Körper schwenkbar vorgesehen ist, um zwischen dem Stütz-Zustand und dem Nicht-Stütz-Zustand geschaltet zu werden,
das Beschränkungs-Element (63) ist vorgesehen, um zwischen einer ersten Position und einer zweiten Position bewegbar zu sein,
die erste Position ist eine Position, in der das Beschränkungs-Element (63) in dem Gestattungs-Zustand angeordnet ist, und nicht gegen den Ständer-Haupt-Körper (61) anliegt, und die zweite Position ist eine Position, in der das Beschränkungs-Element (63) in dem Beschränkungs-Zustand angeordnet ist, und das Schalten von dem Ständer-Haupt-Körper (61) von dem Stütz-Zustand in den Nicht-Stütz-Zustand durch Anlegen gegen den Ständer-Haupt-Körper (61) verhindert,
die Mitten-Ständer-Vorrichtung (60) beinhaltet weiter
ein Drück-Element (65), das den Ständer-Haupt-Körper (61) in eine Richtung drückt, so dass der Ständer-Haupt-Körper (61) von einem Halb-Weg-Zustand zwischen dem Nicht-Stütz-Zustand und dem Stütz-Zustand in den Stütz-Zustand geschaltet ist, und ein Verhinderungs-Element (64a), das konfiguriert ist, um zu verhindern, dass der Ständer-Haupt-Körper (61), der in dem Stütz-Zustand ist und durch das Drück-Element gedrückt ist, schwenkt, und
einen Frei-Raum (CL), der zwischen dem Ständer-Haupt-Körper (61) und dem Beschränkungs-Element (63) ausgebildet ist, wenn der Ständer-Haupt-Körper (61) in dem Stütz-Zustand ist und das Beschränkungs-Element (63) in der zweiten Position angeordnet ist.

3. Das Fahrzeug gemäß Anspruch 1 oder 2, **dadurch gekennzeichnet, dass** die Mitten-Ständer-Vorrichtung (60) weiter ein Halte-Element (64) beinhaltet, das den Ständer-Haupt-Körper (61) an dem Fahrzeug-Haupt-Körper (1) hält, und der Treiber (62) an dem Halte-Element (64) angebracht ist.

4. Das Fahrzeug gemäß irgendeinem der Ansprüche 1 bis 3, **gekennzeichnet durch** eine Leistungs-Quelle (3), die elektrisch mit dem Treiber (62) verbunden ist, wobei der Treiber (62) konfiguriert ist, Zustände von dem Beschränkungs-Element (63) zu schalten, wenn elektrische Leistung von der Leistungs-Quelle (3) zugeführt ist, und konfiguriert ist, um das Beschränkungs-Element (63) in den beschränkten Zustand zu schalten, wenn Zuführung von elektrischer Leistung von der Leistungs-Quelle (3) getrennt ist.

5. Das Fahrzeug gemäß irgendeinem der Ansprüche 1 bis 4, **gekennzeichnet durch:**
eine Lenk-Stange (31), die vorgesehen ist, um drehbar mit Bezug auf den Fahrzeug-Haupt-Körper (1) zu sein, und linke und rechte Griffe (33), die jeweils an linken und
rechten Enden der Lenk-Stange (31) vorgesehen sind, wobei der erste Betätigungs-Abschnitt (SW1) an der Lenk-Stange (31) vorgesehen ist.

6. Das Fahrzeug gemäß Anspruch 5, **dadurch gekennzeichnet, dass** der erste Betätigungs-Abschnitt (SW1) benachbart zu irgendeiner von der rechten Seite von dem linken Griff (33) und einer linken Seite von dem rechten Griff (33) vorgesehen ist.

7. Das Fahrzeug gemäß Anspruch 5 oder 6, **gekennzeichnet durch** einen Brems-Betätiger (34), der an der Lenk-Stange (31) vorgesehen ist.

8. Das Fahrzeug gemäß Anspruch 7, **dadurch gekennzeichnet, dass** der Brems-Betätiger (34) in der Umgebung des Griffs (33) vorgesehen ist, zu dem der erste Betätigungs-Abschnitt (SW1) benachbart ist.

9. Das Fahrzeug gemäß irgendeinem der Ansprüche 1 bis 8, **gekennzeichnet durch** eine Antriebs-Vorrichtung (41), die an dem Fahrzeug-Haupt-Körper (1) vorgesehen ist und konfiguriert ist, um eine Antriebs-Kraft des Fahrzeugs zu erzeugen, wobei der erste Betätigungs-Abschnitt (SW1) konfiguriert ist, um Instruktionen zum Starten der Antriebs-Vorrichtung (41) zu übertragen.

10. Das Fahrzeug gemäß irgendeinem der Ansprüche 1 bis 9, **dadurch gekennzeichnet, dass** der Treiber (62) beinhaltet
einen Aktuator-Haupt-Körper (62a), der konfiguriert ist, um das Beschränkungs-Element (63) zu bewegen, und ein Gehäuse (62b), das den Aktuator-Haupt-Körper (62a) lagert, und
der Aktuator-Haupt-Körper (62a) ist konfiguriert, um das Beschränkungs-Element (63) in den Beschränkungs-Zustand zu schalten, indem es dem Beschränkungs-Element (63) gestattet ist, von dem Gehäuse (62b) um eine erste Länge (L1) vorzustehen, und ist konfiguriert, um das Beschränkungs-Element in den Gestattungs-Zustand zu schalten, durch Zurück-Ziehen von zumindest einem Teil von dem Beschränkungs-Element (63) in das Gehäuse (62b).

11. Das Fahrzeug gemäß Anspruch 10, **dadurch gekennzeichnet, dass** der Treiber (62) angeordnet ist, so dass eine Vorsprungs-Richtung des Beschränkungs-Elements (63) in den Beschränkungs-Zustand nach innen in einer Fahrzeug-Breiten-Richtung gerichtet ist.

12. Das Fahrzeug gemäß Anspruch 10 oder 11, **dadurch gekennzeichnet, dass** das Beschränkungs-Element (63) konfiguriert ist, um von dem Gehäuse (62b) um eine zweite Länge (L2) vorzustehen, die kürzer als die erste Länge (L1) ist, in dem Gestattungs-Zustand.

13. Das Fahrzeug gemäß irgendeinem der Ansprüche 1 bis 12, **dadurch gekennzeichnet, dass** die Mitten-Ständer-Vorrichtung (60) weiterhin ein Abdeck-Element (66) beinhaltet, das den Treiber (62) lagert.

14. Das Fahrzeug gemäß irgendeinem der Ansprüche 1 bis 13, **gekennzeichnet durch** einen zweiten Betätigungs-Abschnitt (SW2), der durch den Benutzer betätigbar ist, wobei
der Treiber (62) konfiguriert ist, um das Beschränkungs-Element (63) von dem Gestattungs-Zustand in den Beschränkungs-Zustand zu schalten, wenn der Ständer-Haupt-Körper (61) in dem Stütz-Zustand ist und der zweite Betätigungs-Abschnitt (SW2) betätigt ist.

15. Das Fahrzeug gemäß irgendeinem der Ansprüche 1 bis 14, vorgesehen in Kombination mit einer eindeutig tragbaren Vorrichtung (SK), die konfiguriert ist, um durch den Benutzer getragen zu werden, **dadurch gekennzeichnet, dass** der Authentifizierer (2) konfiguriert, Authentifizierung der tragbaren Vorrichtung (SK) durchzuführen, und der erste Betätigungs-Abschnitt (SW1) konfiguriert ist, um die Instruktionen zur Durchführung einer Authentifizierung von der tragbaren Vorrichtung (SK) zu dem Authentifizierer (2) zu übertragen.

## Revendications

1. Véhicule comprenant :
un corps principal de véhicule (1) ;
un authentificateur (2) configuré pour mettre en oeuvre l'authentification d'un utilisateur du véhicule ;
une première portion d'actionnement (SW1) actionnable par l'utilisateur ; et
un dispositif de béquille centrale (60), dans lequel le dispositif de béquille centrale (60) comprend
un corps principal de béquille (61) pourvu sur le corps principal du véhicule (1) de manière à pouvoir être commuté entre un état de support et un état sans support, l'état de support étant un état où le corps principal de béquille (61) supporte le corps principal du véhicule (1) par rapport à la surface de la route, et l'état sans support étant un état où le corps principal de béquille (61) ne supporte pas le corps principal du véhicule (1) par rapport à la surface de la route,
un élément de restriction (63) pourvu de manière à pouvoir commuter entre un état d'autorisation et un état de restriction, l'état d'autorisation étant un état où l'élément de restriction (63) permet un passage du corps principal de béquille (61) de l'état de support à l'état sans support, et l'état de restriction étant un état où l'élément de restriction (63) restreint le passage du corps principal de béquille (61) de l'état de support à l'état sans support, et
un pilote (62) configuré pour commuter l'élément de restriction (63) à l'état d'autorisation,
dans lequel la première portion d'actionnement (SW1) est configurée pour transmettre à l'authentificateur (2) une instruction d'authentification pour mettre en oeuvre l'authentification,
**caractérisé en ce que** la première portion d'actionnement (SW1) est configurée pour transmettre au pilote (62) une première instruction de commutation pour commuter l'élément de restriction (63) à l'état d'autorisation, à condition que l'authentification par l'authentificateur (2) ait réussi.

2. Véhicule selon la revendication 1, **caractérisé en ce que**
le corps principal de béquille (61) est pourvu de manière rotative par rapport au corps principal du véhicule (1) pour être commuté entre l'état de support et l'état sans support,
l'élément de restriction (63) est pourvu de manière à pouvoir se déplacer entre une première position et une deuxième position,
la première position étant une position dans laquelle l'élément de restriction (63) se trouve dans l'état d'autorisation et n'est pas à butée contre le corps principal de béquille (61), et la deuxième position étant une position dans laquelle l'élément de restriction (63) se trouve dans l'état de restriction et évite la commutation du corps principal de béquille (61) de l'état de support à l'état sans support en venant à butée contre le corps principal de béquille (61),
le dispositif de béquille centrale (60) comprend en outre
un élément de contrainte (65) qui contraint le corps principal de béquille (61) dans une direction de telle sorte que le corps principal de béquille (61) est commuté d'un état à mi-course entre l'état sans support et l'état de support vers l'état de support, et
un élément de prévention (64a) configuré pour prévenir une rotation du corps principal de béquille (61), qui se trouve dans l'état de support et est contraint par l'élément de contrainte (65), et
un intervalle (CL) est formé entre le corps principal de béquille (61) et l'élément de restriction (63) quand le corps principal de béquille (61) se trouve dans l'état de support et l'élément de restriction (63) se trouve dans la deuxième position.

3. Véhicule selon la revendication 1 ou 2, **caractérisé en ce que**
le dispositif de béquille centrale (60) comprend en outre un élément de support (64) qui supporte le corps principal de béquille (61) sur le corps principal de véhicule (1), et
le pilote (62) est attaché à l'élément de support (64) .

4. Véhicule selon l'une quelconque des revendications 1 à 3, **caractérisé par** une source d'alimentation (3) connectée électriquement au pilote (62), dans lequel
le pilote (62) est configuré pour commuter les états de l'élément de restriction (63) quand la puissance électrique est fournie par la source d'alimentation (3), et est configuré pour commuter l'élément de restriction (63) dans l'état de restriction quand l'alimentation de la puissance électrique par la source d'alimentation (3) est coupée.

5. Véhicule selon l'une quelconque des revendications 1 à 4, **caractérisé par** :
un guidon (31) pourvu de manière tournante par rapport au corps principal du véhicule (1), et
des poignées gauche et droite (33) pourvues respectivement sur les extrémités gauche et droite du guidon (31), dans lequel
la première portion d'actionnement (SW1) est pourvue sur le guidon (31).

6. Véhicule selon la revendication 5, **caractérisé en ce que** la première portion d'actionnement (SW1) est pourvue de manière à être adjacente à un côté quelconque parmi un côté droit de la poignée gauche (33) et un côté gauche de la poignée droite (33).

7. Véhicule selon la revendication 5 ou 6, **caractérisé par** un actionneur de frein (34) pourvu sur le guidon (31).

8. Véhicule selon la revendication 7, **caractérisé en ce que** l'actionneur de frein (34) est pourvu à proximité de la poignée (33) qui est adjacente à la première portion d'actionnement (SW1).

9. Véhicule selon l'une quelconque des revendications 1 à 8, **caractérisé par** un dispositif d'entraînement (41) qui est pourvu sur le corps principal du véhicule (1) et configuré pour générer une force de propulsion du véhicule, dans lequel
la première portion d'actionnement (SW1) est configurée pour transmettre une instruction de démarrage du dispositif d'entraînement (41).

10. Véhicule selon l'une quelconque des revendications 1 à 9, **caractérisé en ce que** le pilote (62) comprend
un corps principal d'actionneur (62a) qui est configuré pour déplacer l'élément de restriction (63), et
un boîtier (62b) qui stocke le corps principal de l'actionneur (62a), et
le corps principal de l'actionneur (62a) est configuré pour commuter l'élément de restriction (63) dans l'état de restriction en permettant à l'élément de restriction (63) de se projeter du boîtier (62b) sur une première longueur (L1), et pour commuter l'élément de restriction (63) dans l'état d'autorisation en rétractant au moins une partie de l'élément de restriction (63) dans le boîtier (62b).

11. Véhicule selon la revendication 10, **caractérisé en ce que** le pilote (62) est agencé de telle sorte qu'une direction de projection de l'élément de restriction (63) dans l'état de restriction est dirigée vers l'intérieur en direction de la largeur du véhicule.

12. Véhicule selon la revendication 10 ou 11, **caractérisé en ce que** l'élément de restriction (63) est configuré pour se projeter vers le boîtier (62b) sur une deuxième longueur (L2) qui est inférieure à la première longueur (L1) dans l'état d'autorisation.

13. Véhicule selon l'une quelconque des revendications 1 à 12, **caractérisé en ce que** le dispositif de béquille centrale (60) comprend en outre un élément de carénage (66) qui stocke le pilote (62).

14. Véhicule selon l'une quelconque des revendications 1 à 13, **caractérisé par** une deuxième portion d'actionnement (SW2) utilisable par l'utilisateur, dans lequel
le pilote (62) est configuré pour commuter l'élément de restriction (63) de l'état d'autorisation à l'état de restriction quand le corps principal de béquille (61) se trouve dans l'état de support et la deuxième portion d'actionnement (SW2) est actionnée.

15. Véhicule selon l'une quelconque des revendications 1 à 14 pourvu en combinaison avec un dispositif portable unique (SK) configuré pour être porté par l'utilisateur, **caractérisé en ce que** l'authentificateur (2) est configuré pour mettre en oeuvre l'authentification du dispositif portable (SK), et la première portion d'actionnement (SW1) est configurée pour transmettre à l'authentificateur (2) l'instruction de mise en oeuvre de l'authentification du dispositif portable (SK).
